Europäisches Patentamt

European Patent Office

Office européen des brevets

(11) Veröffentlichungsnummer: **0 341 203**
**A2**

## (12) EUROPÄISCHE PATENTANMELDUNG

(21) Anmeldenummer: **89810303.1**

(22) Anmeldetag: **24.04.89**

(51) Int. Cl.⁴: **C 04 B 38/06**
**B 01 D 39/20**

(30) Priorität: **02.05.88 US 189036**

(43) Veröffentlichungstag der Anmeldung:
**08.11.89 Patentblatt 89/45**

(84) Benannte Vertragsstaaten:
**AT BE CH DE ES FR GB GR IT LI LU NL SE**

(71) Anmelder: **SCHWEIZERISCHE ALUMINIUM AG**
**CH-3965 Chippis (CH)**

(72) Erfinder: **Hargus, Phillip M.**
**730 Heatherwood Dr.**
**Hendersonville, NC 28739 (US)**

**Mula, Joseph A.**
**107 Arrowroot Place**
**Hendersonville, NC 28739 (US)**

**Der weitere Erfinder hat auf seine Nennung verzichtet**

(54) **Keramischer Schaum und Verfahren zu dessen Herstellung.**

(57) Die vorliegende Erfindung bezieht sich auf ein keramisches Schaummaterial, vorzugsweise einen keramischen Schaumfilter, hergestellt durch Aufbringen eines die Adhäsion fördernden Mittels auf mindestens eine Seite eines offenzelligen flexiblen Schaums mit einer Vielzahl untereinander verbundener, mit einem netzartigen Gewebe des flexiblen Schaums umgebender Poren, imprägnieren des flexiblen, mit dem die Adhäsion fördernden Mittel versehenen Schaums mit einem keramischen Schlicker, Trocknen, Erhitzen des imprägnierten Materials, um die organische Komponente daraus zu entfernen, und Brennen bei einer erhöhten Temperatur. In einer bevorzugten Ausführungsform wird eine Beflockungsbeschichtung vor der Imprägnierung aufgebracht. Die Beflockungsbeschichtung auf die Oberfläche(n) des flexiblen Schaums kann entweder durch Aufbringen der Fasern auf eine auf die Oberfläche(n) vorgängig aufgebrachte, ein Additiv enthaltende Lösung oder durch direktes Aufbringen einer das Additiv und die Fasern enthaltenden Lösung auf die Oberfläche(n) erfolgen.

*FIG-2*

EP 0 341 203 A2

Bundesdruckerei Berlin

**Beschreibung**

## Keramischer Schaum und Verfahren zu dessen Herstellung

Die vorliegende Erfindung betrifft einen keramischen Schaum, insbesondere einen keramischen Schaumfilter, und ein Verfahren zu dessen Herstellung.

Poröse keramische Schaummaterialen sind bekannt. Diese sind besonders geeignet zur Filtration von geschmolzenem Metall, insbesondere von geschmolzenem Aluminium und Aluminiumlegierungen. Die US-Patente 3 893 917, 3 947 363, 3 962 081, 4 024 056, 4 024 212, 4 075 303, 4 265 659, 4 342 644 und 4 343 704 beschreiben einige der als Filter genutzten keramischen Schaummaterialien.

Keramische Schaumfilter werden typischerweise hergestellt durch Imprägnieren eines offenzelligen hydrophoben flexiblen Schaummaterials mit einem ein keramisches Material enthaltenden wässrigen Schlicker, Quetschen des organischen Schaums, um den überschüssigen Schlicker zu entfernen, Anwendung eines Luftgebläses, um irgendeine Oberflächenblockierung zu öffnen, Trocknen und Erhitzen des imprägnierten Schaums, um die organischen Komponenten auszubrennen, und Brennen des Schaumkörpers bei einer erhöhten Temperatur. Eine grosse Vielfalt von Schlickern ist mit dem Ziel, einen keramischen Schaumfilter herzustellen, der eine besonders hohe Temperaturfestigkeit und Formstabilität unter den harten Bedingungen des Gebrauchs beim Filtrieren von geschmolzenem Metall aufweist, angewendet worden. Nach dem US-Patent 4 610 832 wird ein Metallschmelzefilter dadurch hergestellt, dass ein eine thixotrope keramische Zusammensetzung, welche ein gelförmiges Aluminiumoxidhydrat enthält, aufweisender Schlicker verwendet wird.

Die hängige, am 27.11.1987 hinterlegte US-Patentanmeldung Nr. 125 943 beschreibt einen mit einem einen Phosphatbinder enthaltenden keramischen Schlicker hergestellten keramischen Schaumfilter. Die hängige, am 23.03.1987 hinterlegte US-Patentanmeldung Nr. 29 184 beschreibt einen mit Siliciumcarbid und kolloidalem Siliziumoxidbinder enthaltenden keramischen Schlicker hergestellten keramischen Schaumfilter.

Bei einigen Herstellungsverfahren enthält der keramische Schlicker keramische Fasern. Das US-Patent 4 265 659 beschreibt ein derartiges Verfahren, wobei zu einem $Al_2O_3$, $Cr_2O_3$, Bentonit, Kaolin und einen luftabbindenden Zusatz enthaltenden Schlicker keramische Fasern hinzugefügt sind. Das US-Patent 4 391 918 verweist ebenfalls auf ein Verfahren, wobei keramisches Fasermaterial zu einem Schlicker hinzugefügt ist. Die Fasern werden als Risswachstumshemmer eingesetzt und erhöhen dabei die Festigkeit des Filterelements.

Beflockte Polyurethanschäume werden gegenwärtig als Befeuchter und dergleichen gebraucht, wobei die Beflockung zur Oberflächenvergrösserung dient. Diese Art Schäume sind allgemein kaum geeignet zur Herstellung von keramischen Schaumfiltern, weil der erhebliche Anteil der Beflockung die Schlickerpenetration verhindert.

Bei aus retikulierten organischen Schäumen hergestellten Filtern begegnet man gewissen Problemen, wenn die Herstellung bestimmte Schlickertypen einschliesst. Filter die ohne zusätzliche Verfahren wie Sprühen oder Tauchen nach der Imprägnierung hergestellt wurden, können schwache oder brüchige Oberflächen und schlechte Kantenqualität aufweisen oder sind in einigen Fällen wesentlich schwächer als für einige Anwendungen erwartet wird. Verfahren, die Sprühen oder Tauchen einschliessen, wurden mit dem Ziel der Verbesserung der keramischen Beschichtung angewendet. Oft haben die Oberflächen der Schaumsubstrate scharfe Ausformungen, die schwierig zu beschichten sind. Darüber hinaus sind die netzartigen Ausbildungen des Schaumsubstrats allgemein dreieckförmig ausgebildet und die Spitzen eines Dreiecks können nicht gut bedeckt werden. Jedoch erzeugt das Sprühen nach dem Imprägnieren oft einen unerwünschten Laminareffekt. Die aufgesprühte Schicht ist auf einer getrockneten Schicht aufgetragen und die Bindung ist schwach. Auch kann das Sprühen einiges von dem anfänglich getrockneten imprägnierten Schlicker abwaschen und die Struktur schwächen. Das Sprühen muss daher sorgfältig kontrolliert werden, was die Herstellung zusätzlich kompliziert.

Entsprechend ist es eine Aufgabe der vorliegenden Erfindung, einen keramischen Schaum zur Verfügung zu stellen, der eine verbesserte Beschichtung aufweist.

Eine weitere Aufgabe der vorliegenden Erfindung ist, einen keramischen Schaumfilter der oben genannten Art zur Verfügung zu stellen, wobei der Schlicker das netzartige Filtergewebe wirkungsvoll umhüllt.

Eine noch weitere Aufgabe der vorliegenden Erfindung ist, einen keramischen Schaumfilter zur Verfügung zu stellen, der verbesserte mechanische Eigenschaften aufweist.

Es ist eine zusätzliche weitere Aufgabe der vorliegenden Erfindung, ein Verfahren zum Herstellen des obigen Keramikschaumfilters anzugeben.

Diese und weitere Ziele und Vorteile werden durch die nachfolgende Beschreibung verständlich.

Gemäss der vorliegenden Erfindung werden die vorgenannten Aufgaben, Ziele und Vorteile erreicht.

Die vorliegende Erfindung stellt einen keramischen Schaum, insbesondere einen keramischen Schaumfilter, und ein Verfahren zu dessen Herstellung zur Verfügung, der gekennzeichnet ist durch eine verbesserte Beschichtung und verbesserte physikalische Eigenschaften. Die vorgenannten Merkmale werden in vorteilhafter Weise erhalten, ohne das zusätzliche Verfahren wie Sprühen oder Tauchen nach der Imprägnierung notwendig sind. Der verbesserte keramische Schaum nach der vorliegenden Erfindung wird dadurch hergestellt, dass ein offenzelliges, vorteilhaft hydrophobes flexibles Schaummaterial mit einer Vielzahl von untereinander verbundenen Hohlräumen, welche von einem netzartigen Gewebe von flexiblem Schaummaterial umgeben sind, zumindest auf einer Seite mit einem, die Adhäsion fördernden Material versehen wird, danach das Schaummaterial mit einem vorteilhaft keramischen Schlicker imprägniert, getrocknet und, um die organische Komponente zu entfernen, erhitzt und bei einer erhöhten Temperatur gebrannt wird, um den endgültigen keramischen Schaum zu erzeugen. Es wurde gefunden, dass die Adhäsion zwischen dem flexiblem Schaummaterial und dem Schlicker durch Aufbringen einer adhäsiven Beschichtung des flexiblen Schaums vor der Schlickerimprägnierung erhöht werden kann. Es wurde ferner gefunden, dass das Aufbringen des Adhäsivs die Elastizität des Schaums verbessert und die Imprägnierung erleichtert.

Das die Adhäsion verbessernde Material kann aus einer wässrigen oder alkoholischen Lösung bestehen, die irgendein an sich bekanntes Adhäsiv enthält. Die Lösung kann eine dünnflüssige, sprühbare Lösung oder eine dickflüssige Lösung sein, die in den Schaum eingearbeitet werden muss. Die Lösung kann auch organische oder anorganische Fasern enthalten, um eine beflockte Beschichtung zu bilden. Es wurde gefunden, dass die beflockten Beschichtungen besonders geeignet sind, indem sie die hydrophilen Eigenschaften der Oberfläche des Schaummaterials erhöhen, was zu einer Verbesserung der keramischen Beschichtung führt. In einer weiteren Ausgestaltung der vorliegenden Erfindung wird eine beflockte Beschichtung auf wenigstens einer Oberfläche des Schaummaterials vor der Schlickerimprägnierung dadurch gebildet, dass eine ein Adhäsiv enthaltende Lösung auf die Oberfläche(n) aufgebracht wird und danach eine Beflockung durch Aufblasen oder elektrostatische Ablagerung aufgelegt wird.

Das keramische Schaummaterial der vorliegenden Erfindung enthält einen offenzelligen keramischen Körper mit einer Vielzahl von untereinander verbundenen Poren, welche durch ein keramisches netzartiges Gewebe gebildet sind. Dieser keramische Körper wird aus einem mit einem Adhäsiv beschichteten, flexiblen, porösen organischen Polymerschaum, der mit einem keramischen Schlicker imprägniert und bei einer erhöhten Temperatur gebrannt ist, hergestellt. Vorteilhaft ist das keramische Schaummaterial ein keramischer Schaumfilter und enthält einen offenzelligen keramischen Körper mit einer Vielzahl von untereinander verbundenen Poren, welche durch ein keramisches netzartiges Gewebe, welches innere Festigkeitsstrukturen aufweist, gebildet ist. In einer bevorzugten Ausgestaltung sind die inneren Festigkeitsstrukturen innere, von Keramik umhüllte Hohlräume.

Weitere Merkmale der vorliegenden Erfindung werden nachfolgend beschrieben.

Die vorliegende Erfindung wird unter Berücksichtigung der beigefügten Zeichnung näher beschrieben.

Diese zeigt in

Fig. 1 ein Foto eines Querschnitts eines nach der vorliegenden Erfindung hergestellten keramischen Schaums in 13-facher Vergrösserung,

Fig. 2 ein Foto eines Querschnitts eines nach der vorliegenden Erfindung hergestellten, angrenzend an das netzartige Gewebe hohe Festigkeitsstrukturen einschliessenden keramischen Schaums in 31-facher Vergrösserung,

Fig. 3 ein Foto eines Querschnitts eines nicht nach der vorliegenden Erfindung behandelten keramischen Schaums in 40-facher Vergrösserung.

Gemäss der vorliegenden Erfindung wird ein keramischer Schaumfilter aus einem offenzelligen, vorteilhaft hydrophobem, flexiblen Schaummaterial mit einer Vielzahl untereinander verbundener Hohlräume, die mit einem netzartigen Gewebe von dem besagten flexiblen Schaummaterial umgeben sind, hergestellt. Typische Materialien, die gebraucht werden können, enthalten Polymerschäume wie die bevorzugten Polyurethan- und Zelluloseschäume. Allgemein kann jeder verbrennbare organische Kunststoffschaum, der eine Rückfederkraft und die Eigenschaft, in die ursprüngliche Ausgangslage zurückzugehen, aufweist, verwendet werden. Der Schaum muss bei oder unterhalb der Brenntemperatur ausbrennen oder sich verflüchtigen.

Ueblicherweise wird das flexible Schaummaterial ohne irgendeine Art der Vorbehandlung in einem wässrigen keramischen Schlicker eingetaucht. Gemäss der vorliegenden Erfindung wird das flexible Schaummaterial jedoch vor dem Eintauchen in den wässrigen keramischen Schlicker mit einem Adhäsiv und vorteilhaft mit einem Beflockungsmaterial zusätzlich zum Adhäsiv behandelt, um die Adhäsion zwischen dem Schaummaterial und dem keramischen Schlicker zu fördern, die Beschichtung der Netze zu verbessern und die Elastizität des Schaums vor dem Imprägnieren zu erhöhen. Es wird angenommen, dass die Anwendung der Adhäsivvorbehandlung die Schaummaterialoberflächenbenützbarkeit durch den Schlicker beeinflusst und dadurch die Adhäsion zwischen Schlicker und Schaum fördert. Als Folge daraus wird eine dickere keramische Beschichtung mit vollständigerer Bedeckung gebildet.

Nach dem Stand der Technik waren die scharfen Ausbildungen, die auf der Schaumoberfläche vorhanden sind, üblicherweise dünn beschichtet oder nicht beschichtet. Durch die Vorbehandlung nach der vorliegenden Erfindung ist dieses Problem eliminiert. Weitere Vorteile der Vorbehandlung nach der vorliegenden Erfindung sind Verhinderung der Notwendigkeit einer Sprühbeschichtung nach der Schlickerimprägnierung, ein Anstieg der hydrophilen Eigenschaft des Schaummaterials, eine Reduktion und tatsächliche Elimination des Schneiens des keramischen Schaumprodukts und eine Verbesserung der physikalischen Eigenschaften wie beispielsweise der Festigkeit.

Die Adhäsivvorbehandlung nach der vorliegenden Erfindung schliesst das Aufbringen eines die Adhäsion fördernden Materials auf wenigstens eine Schaumoberfläche ein. Ueblicherweise wird das die Adhäsion fördernde Material auf zwei sich gegenüber liegenden Seiten des Schaummaterials aufgebracht. Das die Adhäsion fördernde Material kann irgendein geeignetes bekanntes Adhäsiv sein. Zum Beispiel könnte das Adhäsiv ein wärmeabbindendes oder ein an Luft abbindendes oder ein Kontaktadhäsiv sein. Ueblicherweise wird das Adhäsiv bei Temperaturen, denen das Schaummaterial während des Herstellungsverfahrens ausgesetzt ist, abdampfen.

Das Adhäsivmaterial kann in gelöster Form auf das Schaummaterial aufgebracht werden. Obwohl wässrige Lösungen bevorzugt werden, können auch alkoholische Lösungen gebraucht werden. Wenn die Lösung dünnflüssig ist, ist es vorteilhaft sie durch Sprühen auf den Schaum aufzutragen. Wenn jedoch die Lösung relativ dickflüssig ist, kann sie auch in den Schaum eingearbeitet werden. Ueblicherweise hat eine das Adhäsiv enthaltende Lösung eine Viskosität im Bereich von etwa 1'000 bis etwa 80'000 Centipoise, vorzugsweise von etwa 5'000 bis etwa 40'000 Centipoise.

In einer bevorzugten Vorbehandlung wird die Adhäsion des Schlickers auf das Schaummaterial durch einer Beflockung zusätzlich zum Adhäsivmaterial weiterverbessert. Das Beflockungsmittel kann organische oder anorganische Fasern enthalten. Organische Fasern verflüchtigen sich während des Erhitzens in analoger Weise wie die Verflüchtigung des Schaummaterials. Die organischen Fasern können natürliche organische Fasern wie Baumwolle oder Holzfasern oder synthetische organische Fasern wie Rayon, Nylon oder Acrylfasern einschliessen, sind darauf aber nicht beschränkt. Anorganische Fasern verflüchtigen sich während des Brennens der Keramik nicht und sind üblicherweise mit dem Schlicker der Keramik umhüllt. Die anorganischen Fasern können Glas-, $Al_2O_3$-, Alumosilikat-, SiC-, $ZrO_2$- und Kohle- oder Graphitfasern einschliessen, sind darauf aber nicht beschränkt. Die Faserlängen können entsprechend der Porengrösse des Schaummaterials von "kurz" zu "mittel" und zu "lang" variiert werden. Ueblicherweise sind die Fasern weniger als 0,3 mm lang. Der Anteil der aufgebrachten Fasern kann ebenfalls variiert werden. Das Beflockungsmittel kann entweder als Teil der als Adhäsiv enthaltenden Lösung aufgebracht werden oder nach der Applikation des Adhäsivmaterials. Zum Beispiel kann die Beflockungsbeschichtung hergestellt werden durch Aufbringen des Adhäsivs auf eine erste Oberfläche, Aufbringen des Beflockungsmittels auf die erste Oberfläche, während die Adhäsivbeschichtung noch klebrig ist, Trocknen der Oberfläche, Umdrehen des Schaummaterials und Wiederholung der Behandlung auf der anderen Oberfläche. Die Behandlung kann auch an den Schaumkanten bzw. -seiten erfolgen. Wenn notwendig kann die mit dem Adhäsiv beschichtete Oberfläche erwärmt werden, um diese vor dem Aufbringen des Flockungsmittels klebrig zu machen. Trägerstoffe für die Fasern während der Beflockung und Binder, um diese am Ort zu halten, können wenn notwendig zur Anwendung kommen. Die Stoffe und/oder Binder können auch organische und anorganische Stoffe oder deren Kombinationen einschliessen. Mögliche organische Stoffe enthalten an Luft abbindende Kleber. Anorganische Stoffe können Silicat- oder Phosphatbinder enthalten.

Die Beflockung kann in jeder geeigneten, an sich bekannten Weise aufgebracht werden, wenn diese separat erfolgt. Zum Beispiel kann die Beflockung mechanisch unter Anwendung eines Gebläses oder Klopfwerks, durch elektrostatische Ablagerung oder durch deren Kombination aufgebracht werden. Beim Aufbringen der Beflockung ist wesentlich, dass das Beflockungsmittel den Porenraum nicht um mehr als 35% reduziert. Darüber hinaus liegende überschüssige Fasern können durch Saugen oder Blasen entfernt werden.

Einer der Vorteile der vorliegenden Erfindung ist, dass man sowohl nur die Oberflächen mit dem Adhäsiv oder der Beflockung als auch den Schaum durch und durch beschichten kann, was natürlich von der Porengrösse/Beflockungsmittel-Verhältnis abhängt. Wenn die Porengrösse kleiner wird, wird selbstverständlich die Möglichkeit zur Gesamtbeflockung eingeschränkt. Andere Vorteile des Aufbringens der Adhäsivbeschichtung oder der Beflockung werden in der zusätzlichen Erhöhung der Elastizität des Schaums gesehen, was ihn leichter imprägnieren und in gewünschte Form schneiden lässt. Höher elastische Schäume sind leichter zu imprägnieren, weil sie eine höhere Rückstellkraft während des Einarbeitens aufweisen, was den Beschichtungsprozess und die Erhaltung der Dimensionsstabilität des Schaums unterstützt.

Nachdem die Adhäsiv- oder Beflockungsbeschichtung aufgetragen worden ist, wird das Schaummaterial mit einem kera mischen Schlicker imprägniert. Vorteilhaft wird ein wässriger keramischer Schlicker verwendet, der thixotrop ist und einen relativ hohen Fliessfähigkeitsgrad aufweist, und aus einer wässrigen Lösung des gewünschten keramischen Materials besteht. Jeder geeignete Schlicker, der die obigen Merkmale aufweist, z.B. einer der SiC enthält, kann benutzt werden.

Wenn ein SiC-Schlicker angewendet wird, um ein Filter herzustellen, sollte die SiC-Komponente vorteilhaft eine Korngrösse von - 325 mesh bzw. kleiner 45 µm aufweisen; jedoch kann man auch SiC mit einer Korngrösse von - 100 mesh bzw. kleiner/gleich 150 µm gebrauchen. Die Möglichkeit der Verwendung von feinkörnigem keramischen Material wie z.B. Feinkorn von 10 µm oder kleiner ist ein markanter Vorteil, insbesondere unter dem Kostengesichtspunkt. Der Feststoffgehalt der Zusammensetzung muss wenigstens 50% SiC betragen.

Man kann zusätzliche keramische Materialien in Kombination mit der SiC-Komponente verwenden. $Al_2O_3$ ist ein besonders bevorzugtes Additiv. Wenn dieses verwendet wird, sollte es mit einer Korngrösse von - 225 mesh, das heisst kleiner 45 µm, vorliegen. Natürlich können auch andere Keramikmaterialien wie $Al_2O_3$, $CrO_2$, mit Zirkon verstärkter Korund, $ZrO_2$ plus $Al_2O_3$, teilstabilisiertes $ZrO_2$, $Cr_2O_3$, MgO, Cordierit, Mullit etc. benutzt werden.

Der SiC-Schlicker enthält auch gewöhnlich einen Binder. Dieser ist vorteilhaft ein kolloidaler $SiO_2$-Binder und wird als eine wässrige Dispersion der Teilchen unter Verwendung von 10 bis 50% Wasser gebraucht. Die kolloidale Dispersion ist eine stabile, sich nicht absetzende Suspension mit einer Partikelgrösse von 1 µm oder kleiner. Die kolloidale $SiO_2$-Komponente liefert den Binder und aufgrund der kolloidalen Natur der Dispersion hilft es die begehrte Thixotropie zu erhalten.

Selbstverständlich können andere Additive Verwendung finden, sowohl als zusätzliche Binder als auch aus anderen gewünschten Gründen. Beispielsweise können vorteilhaft Morellonit, Aquathix, was eine Handelsmarke der Tenneco Chemicals für wasserlösliche Polysaccharide ist, Bentonit, Kaolin oder ähnliches benutzt werden.

Detaillierte Verfahren zur Herstellung keramischen Schaums für die Filtration geschmolzener Metalle sind in den US-Patenten 3 962 081, 4 075 303 und 4 024 212 beschrieben, wobei deren Offenbarung durch Zitierung als hierin eingeschlossen gelten sollen.

Kurz gesagt wird das Schaummaterial mit dem wässrigen keramischen Schlicker so imprägniert, dass die faserähnlichen netzartigen Gewebe damit beschichtet und die Lücken damit ausgefüllt sind. Gewöhnlich wird bevorzugt, den Schaum einfach in den Schlicker für eine kurze Zeit unterzutauchen, um nahezu vollständige Imprägnierung des Schaums sicherzustellen. Die Porengrösse des Polymerschaummaterials kann gewöhnlich 3 ppi (Poren per Zoll) oder kleiner sein. Die Porengrösse im Bereich von 3 bis 25 ppi wurde als besonders vorteilhaft für Eisen- oder Eisenlegierungsfiltration bezüglich eines höheren totalen Materialdurchgangs gefunden, obgleich man auch kleinere Porengrössen, z.B. bis zu 50 ppi, gebrauchen könnte.

Der imprägnierte Schaum wird dann zusammengepresst, um einen Teil des Schlickers auszutreiben, wobei das faserähnliche netzartige beschichtete Gewebeteil mit einer Vielzahl von blockierten Poren im Schaumkörper zurückbleibt - das heisst mit homogen verteilten und nicht zusammengeballten Poren durch den gesamten Keramikkörper -, welche den gewundenen Fliessweg erhöht. Für solche Fälle, in welchen maximaler Durchsatz mit geringerem Filtrationsgrad erwünscht ist, wird eine relativ grobe Porengrösse mit sehr wenigen blockierten Poren vorgezogen. Bei einer kontinuierlichen Arbeitsweise kann man z.B. den imprägnierten Schaum durch ein Walzenpaar laufen lassen, um die gewünschte Austreibung des Schlickers aus dem Schaum zu erreichen und den gewünschten Imprägnationsanteil zurückzulassen. Selbstverständlich kann dies manuell auch durch einfaches Quetschen des flexiblen Schaummaterials bis zum gewünschten Ausmass geschehen. Bis zu diesem Schritt ist der Schaum noch flexibel und kann wenn erwünscht für geeignete Filtrationszwecke passend geformt werden, z.B. in Form von gerundeten Platten, Hohlzylindern etc.. Es ist notwendig, den geformten Schaum durch konventionelle Mittel so lange in der ursprünglichen Form zu halten bis die Struktur getrocknet oder das organische Substrat zersetzt ist. Der imprägnierte Schaum wird dann mit Hilfe geeigneter Methoden wie Lufttrocknung, beschleunigte Trocknung bei einer Temperatur von ab 100 bis 700° C über ab 15 Min. bis 6 Std. oder durch Mikrowellentrocknung getrocknet. Lufttrocknung kann von 8 bis 24 Std. angewendet werden. Nach Trocknung wird das Material bei erhöhter Temperatur unter Bildung des keramischen Schaumfilters gebrannt. Die Brenntemperaturen werden durch die besondere Zusammensetzung des Materials bestimmt und liegen z.B. oft oberhalb etwa 1390° C bis hinauf zu etwa 1700° C. Nach dem Brennen ist das resultierende Produkt vorteilhaft durch eine Vielzahl blockierter Poren, welche im wesentlichen homogen in der Körperstruktur verteilt sind, charakterisiert. Die Brenntemperatur bei oder nahe bei der Höchsttemperatur beträgt wenigstens 15 Min. und gewöhnlich wenigstens 1 Std., jedoch üblicherweise weniger als 10 Std.. Die totale Brennzeit einschliesslich der Aufheizzeit zur und Abkühlungzeit von der Höchsttemperatur kann natürlich in Abhängigkeit des verwendeten Ofens stark variieren.

Das resultierende Produkt ist durch oben beschriebene Merkmale charakterisiert und weist die ebenfalls oben beschriebenen signifikanten Vorteile auf. Die beschichteten Fasern werden als eine Verstärkung bewirkende Zentren angesehen, welche dem Filter höhere Festigkeitseigenschaften ohne signifikanten Gewichtsanstieg verleihen. Nach der vorliegenden Erfindung hergestellte Filter zeigen einen Anstieg in der Festigkeit von etwa 25 bis 50% gegenüber unbehandeltem Material. Die Filter zeigen auch eine verbesserte Kantenqualität und praktisch kein Schneien. Es wurde gefunden, dass nach der vorliegenden Erfindung hergestellte Filter ungefähr eine 90 prozentige Reduktion des Schneiens im Vergleich mit nach anderen Methoden hergestellten Filtern aufwiesen.

Selbstverständlich können zusätzliche anorganische Additive gebraucht werden, um besonders bevorzugte Eigenschaften zu erhalten, z.B. Sinterhilfsmittel, Kornwachstumsinhibitoren oder anorganische rheologische Hilfsmittel. Andere organische Additive einschliesslich z.B. temporäre Binder oder rheologische Hilfsmittel können auch vorteilhaft verwendet werden.

Die spezifischen Merkmale der vorliegenden Erfindung werden anhand von Beispielen näher erläutert.

Beispiel 1

Es wurden Polyurethanplatten von 50 x 75 mm und einer Dicke von 12 mm mit einer Porengrösse von 3 bis 5 ppi verwendet. Es wurde ein im Handel erhältliches, in Wärme abbindendes wasserlösliches Latexadhäsiv in einer Konzentration von etwa 50 Vol.% hergestellt. Eine Beflockungsbeschichtung wurde auf jede Platte durch Aufsprühen der Adhäsivlösung auf die erste Oberfläche unter Bildung einer klebrigen Oberfläche, Aufsprühen eines Beflockungsmittels auf die klebrige Oberfläche, Abbindenlassen des Adhäsivs in einem Ofen bei einer Temperatur von etwa 50° C (150° F) über 15 Min. und Wiederholung der Behandlung auf der zweiten, der ersten Seite entgegengesetzten Seite. Die aufgebrachten Beflockungen bestanden jeweils aus kurzen Baumwollfasern, mittleren Acrylfasern, mittleren Nylonfasern und langen Rayonfasern. Die Fasern wurden durch Verwirbeln in einem Spritzpistolenbehälter elektrostatisch aufgeladen. Gewisse, aber nicht alle Platten wurden einer Saug- und Blasbehandlung zur Entfernung überschüssiger Fasern unterworfen, um eine Reduktion des Porenraums auf weniger als etwa 35% sicherzustellen.

Es wurde ein wässriger thixotroper Schlicker einer SiC enthaltenden keramischen Zusammensetzung mit kolloidalem $SiO_2$ (silica)-Binder hergestellt. Die Zusammensetzung des Schlickers war etwa 25% SiC, 25% $Al_2O_3$, 9% kolloidales $SiO_2$ (silica) und 1% Montmorillonit. Jede der Platten wurde dann mit dem Schlicker imprägniert. Die Imprägnierung wurde bewirkt durch Eintauchen der Schaumplatten in den Schlicker und Gebrauch von Walzenpaaren zum Zusammenpressen des Schaums und Verdrängen eines Schlickeranteils, wobei ein mit Schlicker beschichteter und mit einer Vielzahl im gesamten Körper verteilten blockierten Poren, die die Gewundenheit des Fliesswegs erhöhen, versehener stegartiger Netzgewebeanteil entstand.

Die resultierenden imprägnierten Schäume wurden getrocknet und durch Brennen über 1 Std. bei etwa 1160° C (2150° F) erhitzt, um die darin enthaltenden organischen Komponenten zu entfernen. Die resultierenden, wie oben beschrieben aus beflocktem Schaum hergestellten keramischen Schaummuster waren im Vergleich mit unbehandelten Schäumen durch bessere Kanten- und Oberflächenqualität gekennzeichnet. Die besten Resultate wurden mit Baumwoll- und Acrylfasern erhalten. Die Muster mit über etwa 35% waren blockiert und diejenigen mit weniger als etwa 35% waren gut.

## Beispiel 2

In diesem Beispiel wurden Polyurethanplatten von verschiedenen Massen und unterschiedlichen Porengrössen zur Herstellung von keramischen Schaumprodukten gemäss der vorlie genden Erfindung verwendet. Die Platten hatten bei einer einheitlichen Dicke von etwa 2,19 cm Ausmasse von etwa 5 x 7,5 cm, 7,5 x 10 cm, 10 x 10 cm. Bei gleichem Ausmass kamen Platten mit 15 und 20 ppi zur Anwendung.

Jede Platte wurde zur Bildung einer beflockten Beschichtung auf zwei gegenüberliegenden Seiten vorbehandelt. Die Beschichtung erfolgte gemäss Beispiel 1 unter Verwendung von ausschliesslich kurzen Baumwollfasern. Jede Platte wurde dann mit einem einen Monoaluminiumphosphatbinder enthaltenden $Al_2O_3$-Schlicker durch Eintauchen in den Schlicker, Gebrauch von Walzenpaaren zum Zusammenpressen des Schaums und Verdrängen eines Schlickeranteils beschichtet, wobei ein beflockter netzartiger Gewebeanteil entstand. Die imprägnierten Platten wurden getrocknet und durch Brennen bei etwa 1160° C (2150° F) über eine Stunde erhitzt, um die organischen Komponenten daraus zu entfernen.

Während keramische Schaumprodukte ohne beflockte Beschichtung normalerweise abschuppen oder schneien, weisen die in diesem Beispiel hergestellten Produkte keine Abschuppung bzw. kein Schneien auf. Die Produkte weisen ferner eine ungeheure Verbesserung in der Sägbarkeit auf Mass nach dem Brennen auf. Darüber hinaus bildeten die Produkte blockierte Poren unter etwa 35%.

## Beispiel 3

Unter Anwendung der Methode nach Beispiel 1 und 2 wurden Polyurethanplatten mit Ausmassen von etwa 5 x 7,5 cm bei einer Dicke von etwa 1,19 cm und 15 ppi mit einer kurzen Baumwollbeflockung enthaltenden Beschichtung auf den beiden Seiten versehen. Die Platten mit der beflockten Beschichtung wurden dann in einen $ZrO_2$, $Al_2O_3$ und Böhmitgel enthaltenden Schlicker getaucht und zur keramischen Schaumprodukten gemäss der in den Beispielen 1 und 2 genannten Methode umgeformt, ausser dass in diesem Fall der getrocknete imprägnierte Schaum im Gegensatz zu den Beispielen 1 und 2, wo eine Brenntemperatur von 1177° C (2150° F) angewendet wurde, bei 1620° C (2950° F) über 8 Std. gebrannt wurde.

Die so hergestellten Produkte wiesen eine erhöhte Sägefestigkeit nach dem Brand und keine Abschuppung auf. Die keramischen Schaumprodukte wurden ohne Schwierigkeiten in eine Vielzahl von dünnen Scheiben geschnitten.

## Beispiel 4

Polyurethanscheiben mit Durchmessern von 7,5 und 10 cm, mit einer Kantenschräge von 18 Grad, einer Dicke von etwa 19 mm und 10 ppi wurden nach der Methode von Beispiel 2 mit einer beflockten Beschichtung auf den beiden sich gegenüberliegenden Seiten beschichtet. Die beflockten Scheiben wurden dann in einen Schlicker, der $Al_2O_3$ und Böhmitgel enthielt, getaucht und zu keramischen Schaumprodukten nach der in Beispiel 3 angegebenen Methode umgebildet. Die resultierenden Schaumprodukte waren ebenso fest oder fester als ein Produkt, das aus unbeflocktem Schaum hergestellt wurde und eine Sprühbeschichtung nach Imprägnierung und Trocknen erhielt. Das vorliegende Verfahren ohne Sprühbeschichtung liefert somit ein kostengünstiges und hohe Qualität aufweisendes Produkt.

## Beispiel 5

Nach Beispiel 1 hergestellte Filter wurden auf mechanische Festigkeit getestet. An 20 Proben der Ausmasse 50 x 75 mm und der Dicke von 22 mm wurden 3 -.- Biegebruchtests durchgeführt. Die mittlere Bruchspannung wurde berechnet und mit analogen unbeflockten Schäumen verglichen. Kurze Baumwollfasern, mittlere Acrylfasern, mittlere Nylonfasern und lange Rayonfasern wurden verwendent. Die resultierenden Spannungen sind unten aufgeführt, wobei die Filter nach der vorliegenden Erfindung alle eine Bruchspannung von über 445 N zeigen.

| Probe mit: | Bruchspannung N : |
|---|---|
| kurze Bauwollfasern | 458 |
| mittlere Acrylfasern | 649 |
| mittlere Nylonfasern | 454 |
| lange Rayonfasern | 454 |
| ohne Beflockung | 311 |

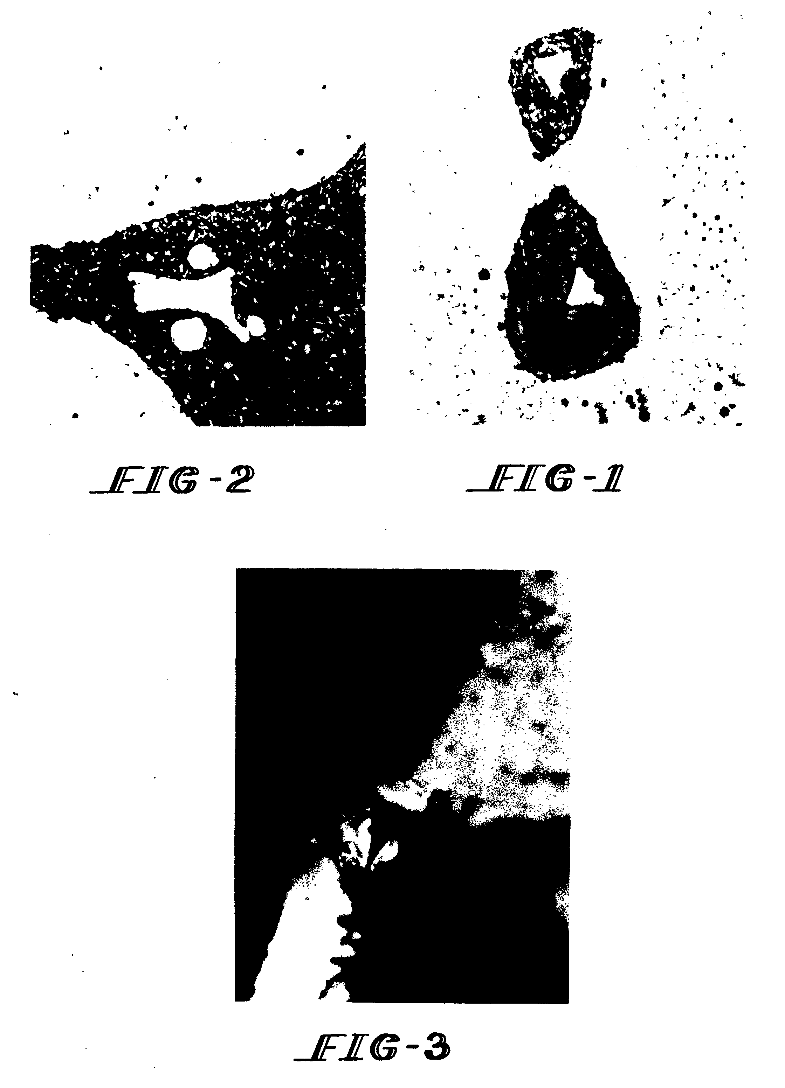

Es wird vermutet, dass diese überraschende Brucherhöhung auf die innere netzartige Gewebestruktur und die durch die Beflockung erzeugte Ummantelung der Gewebestruktur zurückzuführen ist. Diese Eigenschaften sind deutlich auf den beigefügten fotografischen Abbildungen zu sehen. Abbildung 1 zeigt einen Querschnitt von zwei netzartigen Gewebestrukturen eines nach der vorliegenden Erfindung hergestellten Schaumkeramikfilters in 13-facher Vergrösserung nach Imprägnierung mit Eisen. Der zentrale dreieckförmige Kern wäre im endgültigen keramischen Schaumprodukt hohl. Gemäss der vorliegenden Erfindung zeigt Abbildung 1 deutlich die hervorragende keramische Bedeckung der Gewebestruktur. Abbildung 2 zeigt einen Querschnitt einer netzartigen Gewebestruktur eines nach der vorliegenden Erfindung hergestellten Schaumkeramikfilters in 31-facher Vergrösserung nach der Imprägnierung mit Eisen. Hier wäre wiederum der Kern des endgültigen keramischen Schaumprodukts hohl. Die drei kreisförmigen Bereiche, welche den Kern umgeben, zeigen Stellen von Beflockungsfasern, welche im endgültigen keramischen Schaum Verstärkungsstrukturen bilden. Die Beflockungsfasern haben sich zusammen mit dem organischen netzartigen Trägergewebe und dem Additiy zersetzt und bilden angrenzend an das hohle netzartige Gewebe hohle Verstärkungsstrukturen, wie klar aus Abbildung 2 hervorgeht. Zusätzlich zeigt Abbildung 2 gemäss der vorliegenden Erfindung deutlich die hervorragende keramische Bedeckung des netzartigen Trägergewebes und der Fasern. Die hervorragende keramische Beschichtung des netzartigen Trägergewebes gemäss der vorliegenden Erfindung, und wie sie in den Abbildungen 1 und 2 ersichtlich ist, steht in deutlichem Gegensatz zu Abbildung 3. Abbildung 3 zeigt einen Querschnitt einer netzartigen Gewebestruktur eines keramischen Schaumfilters in 40-facher Vergrösserung, das nach Beispiel 1 hergestellt wurde, jedoch ohne jede Additiy- und Faserbehandlung. Es ist aus Abbildung 3 deutlich erkennbar, dass die scharfen üblicherweise dreiecksförmigen Ausbildungen der netzartigen Trägergewebestruktur entweder dünn beschichtet oder unbeschichtet sind, dies im Gegensatz zur ausgezeichneten keramischen Bedekkung gemäss der vorliegenden Erfindung.

Es ist ersichtlich, dass nach der vorliegenden Erfindung ein keramischer Schaumfilter und ein Verfahren zu dessen Herstellung zur Verfügung gestellt worden ist, der vollends die vorgenannten Aufgaben, Ziele und Vorteile erfüllt.

Obwohl die Erfindung in Verbindung mit spezifischen Ausführungen beschrieben worden ist, ist es einleuchtend, dass viele Alternativen, Modifikationen und Variationen für den Fachmann in Kenntnis der obigen Beschreibung ersichtlich sind. Entsprechend ist beabsichtigt, dass alle diese Alternativen, Modifikationen und Variationen als in den breiten Schutzumfang der nachfolgenden Patentansprüche fallend zu sehen sind.

## Patentansprüche

1. Verfahren zur Herstellung eines keramischen Schaummaterials,
dadurch gekennzeichnet,
dass ein flexibles poröses organisches Polymerschaummaterial in einem ersten Verfahrensschritt auf wenigstens einer Seite durch Aufbringen eines die Adhäsion fördernden Materials und eines Beflockungsmittels mit einer Adhäsivbeschichtung versehen wird, in einem zweiten Verfahrensschritt das so behandelte Schaummaterial mit einem keramischen Schlicker imprägniert wird, wobei die Adhäsivbeschichtung die Adhäsion zwischen dem Schaummaterial und dem keramischen Schlikker fördert, und der imprägnierte Schaum nach Trocknen und Erhitzen bei einer erhöhten Temperatur gebrannt wird.

2. Verfahren nach Anspruch 1, dadurch gekennzeichnet, dass die Adhäsivbeschichtung durch Aufbringen einer das die die Adhäsion fördernde Material enthaltende Lösung auf wenigstens einer Seite des flexiblen Schaummaterials erfolgt.

3. Verfahren nach Anspruch 2, dadurch gekennzeichnet, dass das Aufbringen der Lösung auf zwei sich gegenüber liegenden Seiten erfolgt.

4. Verfahren nach Anspruch 2, dadurch gekennzeichnet, dass die Adhäsivbeschichtung durch Aufsprühen einer das die Adhäsion fördernde Material enthaltenden Lösung auf wenigstens einer Seite des flexiblen Schaummaterials erfolgt.

5. Verfahren nach Anspruch 2, dadurch gekennzeichnet, dass die Lösung ein in Wärme abbindendes, die Adhäsion förderndes Material enthält und nach Aufbringen desselben auf wenigstens einer Seite des flexiblen Schaummaterials wenigstens diese Seite des Schaummaterials erwärmt wird.

6. Verfahren nach Anspruch 1, dadurch gekennzeichnet, dass das Beflockungsmaterial auf wenigstens einer Seite des Schaummaterials auf das vorgängig darauf aufgebrachte, die Adhäsion fördernde Material aufgebracht wird.

7. Verfahren nach Anspruch 1, dadurch gekennzeichnet, dass das Beflockungsmittel aus Baumwollfasern, Rayonfasern, Nylonfasern, Acrylfasern, Fiberglasfasern, $Al_2O_3$-Fasern, Alumosilicatfasern, SiC-Fasern, $ZrO_2$-Fasern und Kohle- oder Graphitfasern oder aus Mischungen davon besteht.

8. Verfahren nach Anspruch 1, dadurch gekennzeichnet, dass das Beflockungsmittel derart aufgebracht wird, dass der Porenbereich in dem Schaummaterial weniger als etwa 35% reduziert wird.

9. Verfahren nach Anspruch 6, dadurch gekennzeichnet, dass die Beflockungsbeschichtung vor dem zweiten Verfahrensschritt der Imprägnierung mit keramischem Schlicker erwärmt wird.

10. Verfahren nach Anspruch 1, dadurch gekennzeichnet, dass das Schaummaterial aus einem offenzelligen, hydrophoben Polyurethanschaummaterial mit einer Vielzahl untereinander verbundener und mit einem netzartigen Gewebe umgebener Poren besteht und der zweite Verfahrensschritt der Imprägnierung durch Eintauchen des Schaummaterials mit der Adhäsivbeschichtung in einen wässrigen thixotropen Schlicker, der eine wässrige Suspension eines keramischen Materials enthält, erfolgt.

11. Verfahren nach Anspruch 10, dadurch gekennzeichnet, dass das keramische Material aus SiC, $Al_2O_3$, $ZrO_2$, $ZrO_2$ mit $Al_2O_3$, teilstabilisiertes $ZrO_2$, $Cr_2O_3$, MgO, Cordierit und Mullit oder aus Mischungen davon besteht.

12. Verfahren nach Anspruch 1, dadurch gekennzeichnet, dass der erste Verfahrensschritt des Aufbringens des Adhäsion fördernden Materials und des Beflockungsmittels gleichzeitig erfolgt.

13. Keramisches Schaummaterial, dadurch gekennzeichnet, dass es aus einem keramischen Körper mit einer Vielzahl untereinander verbundener, mit einem netzartigen Gewebe umhüllter Poren besteht und aus einem flexiblen organischen Polymerschaum, der durch Beschichtung mit einem die Adhäsion fördernden Material und Beflockungsmaterial, Imprägnierung mit einem keramischen Schlicker und Brennen bei einer erhöhten Temperatur hergestellt ist.

14. Keramisches Schaummaterial, dadurch gekennzeichnet, dass es aus einem offenzelligen keramischen Körper mit einer Vielzahl untereinander verbundener, durch ein netzartiges Gewebe gebildeter Poren besteht, wobei das Gewebe eine innere Festigkeitsstruktur bildet.

15. Keramisches Schaummaterial nach Anspruch 14, dadurch gekennzeichnet, dass es eine erhöhte Kantenqualität aufweist.

16. Keramisches Schaummaterial nach Anspruch 14, dadurch gekennzeichnet, dass die innere Festigkeitsstruktur durch mit keramisches Material umhüllte Hohlräume gebildet ist.

17. Keramisches Schaummaterial nach Anspruch 14, dadurch gekennzeichnet, dass es ein Filter für eine Metallschmelze ist.

18. Keramisches Schaummaterial nach Anspruch 14, dadurch gekennzeichnet, dass der keramische Körper aus SiC, $Al_2O_3$, $ZrO_2$, $ZrO_2$ mit $Al_2O_3$, mit $Al_2O_3$ verstärktem $ZrO_2$, teilstabilisiertem $ZrO_2$, $Cr_2O_3$, MgO, Cordierit und Mullit oder aus Mischungen davon besteht.

19. Keramisches Schaummaterial nach Anspruch 14, dadurch gekennzeichnet, dass es eine Bruchlast von über 446 N aufweist.

FIG-2

FIG-1

FIG-3